# EUROPEAN PATENT SPECIFICATION

(11) **EP 3 400 855 B1**
(45) Date of publication and mention of the grant of the patent: **26.02.2020**
(21) Application number: 18171747.1
(22) Date of filing: 11.05.2018
(51) Int. Cl.: A47J 36/02, B05D 1/02, B05D 1/18, B05D 1/28, B05D 1/38, B05D 3/00

(54) **THERMAL INSULATING COATING FOR COOKWARE**
WÄRMEISOLIERENDE BESCHICHTUNG FÜR KOCHGESCHIRR
REVÊTEMENT D'ISOLATION THERMIQUE POUR USTENSILES DE CUISINE

(30) Priority: 12.05.2017 US 201715594130
(43) Date of publication of application: 14.11.2018
(73) Proprietor: Allure Home Creations Co. Inc., Boonton, NJ 07005 (US)
(72) Inventor: Ho, Edward, Boonton, NJ New Jersey 07005 (US)
(74) Representative: Goddar, Heinz J.

(56) References cited:
- US-A- 4 959 256
- US-A1- 2007 134 488
- US-A1- 2011 111 239
- US-B1- 6 258 418

## Description

### TECHNICAL FELD

The present disclosure generally relates to cookware, and more particularly relates to cookware including thermal insulating coatings.

### BACKGROUND

Typically cookware may be produced from materials having a relatively a high thermal conductivity, frequently metallic materials. The relatively high thermal conductivity of
the cookware allows heat to be readily absorbed from the exterior of the cookware and transferred to the interior surfaces of the cookware to be applied to food being prepared within
the cookware. While the relatively high thermal conductivity of the material forming the cookware may allow ready absorption and distribution of heat, such relatively high thermal conductivity may also allow heat to be dissipated through exterior surfaces of the cookware, which may reduce the efficiency of the cookware. Additionally, often the relatively high thermal
conductivity of the cookware and the dissipation of heat through exterior surfaces of the cookware may present a risk of burning a User who may inadvertently contact heated cookware
with bare, or inadequately protected, skin.

US 4 959 256 A discloses a coated cookware article according to the preamble of claim 1 and a method according to the preamble of claim 15.

### SUMMARY

According to the invention, a coated cookware article is provided. The coated cookware article includes a cookware substrate and a thermal insulating coating disposed on
at least a portion of the exterior of the cookware substrate. The thermal insulating coating includes a binder component and a microsphere component dispersed in the binder component.
The microsphere component includes between about 2% to 25% of microspheres by weight
of the binder component.

One or more of the following features may be included. The cookware substrate may include one or more of aluminum, stainless steel, copper, cermet, and cast iron. The thermal insulating coating may be disposed on exterior surfaces intended to receive indirect flame. The thermal insulating coating may be disposed on an exterior sidewall of the cookware sub strate.

The binder component may include an enamel-based binder. The binder component may include a resin-based binder. The binder component may include a ceramic-based binder. The binder component may include a high temperature paint. The microsphere component may include glass microspheres. The microsphere component may include ceramic microspheres. The microspheres may include a combination of glass microspheres and ceramic microspheres. According to the invention, the microsphere component includes hollow microspheres. The microsphere component may include between about 5% to about 18% of microspheres by weight of the binder component. The thermal insulating coating may have a thickness of between about 0.05 mm to about 3.0 mm. The coated cookware article may further include a protective coating disposed on at least a portion of an exterior surface of the thermal insulating coating.

According to the invention, a method of providing a thermal insulating exterior on cookware includes providing a thermal insulating system. The thermal insulating system includes a fluid binder component and a microsphere component. The microsphere component includes between about 2%-25% microspheres by weight of binder solids. The method may also include applying the thermal insulating system to at least a portion of an exterior of a cookware substrate. The method may further include curing the thermal insulating system to provide a solid thermal insulating coating.

One or more of the following features may be included. The fluid binder component may include one or more of an enamel binder, a resin binder, an a ceramic binder. The microspheres may include glass microspheres. The microspheres may include ceramic microspheres. The microspheres may include a mixture of glass microspheres and ceramic microspheres. According to the invention, the microspheres includes hollow microspheres. The thermal insulating coating may include between about 5% to about 18% of microspheres by weight of the binder component in the solid thermal insulating coating.

Applying the thermal insulating system may include one or more of a solgel process, a spray coating process, a dip coating process, and a brush coating process. Applying the thermal insulating system may include applying the thermal insulating system to have a cured thickness of between about 0.05 mm to about 3.0 mm. Curing the thermal insulating system may include removing a fluid component of the binder component. The method may further include post curing the solid thermal insulating coating. The method may further include applying a protective coating to at least a portion of the solid thermal insulating coating.

### BRIEF DESCRIPTION OF DRAWINGS

FIG. 1 diagrammatically depicts a cookware article according to an example embodiment; and
FIG. 2 diagrammatically depicts a detailed view of a thermal insulating coating according to an example embodiment.

### DETAILED DESCRIPTION OF ILLUSTRATIVE EMBODIMENTS

Consistent with embodiments of the present disclosure, a thermal insulating coating is provided. According to some particular illustrative embodiments, the thermal insulating coating may be applied to at least a portion of an exterior of a cookware article. In some implementations, the thermal insulating coating may reduce the rate of thermal transfer from the coated cookware substrate. In some embodiments, the rate of thermal transfer from the coated cookware substrate may be reduced sufficiently such that if a user inadvertently touches the thermal insulating coating of a heated cookware article, the user may not immediately be seriously burned. As such, the user may have a small window of time (e.g., less than a second up to several seconds, depending upon coating characteristics and the temperature of the cookware article) to remove his or her hand (or other contacting skink) from the coated cookware article prior to the onset of serious burning. Additionally / alternatively, in some embodiments the thermal insulating coating may provide the cookware article with improved heat retention. For example, the thermal insulating coating may reduce the transfer of heat through the coated portion of the cookware article. In some such embodiments, faster and/or more efficient cooking may be realize (e.g., as a result of more heat being retained by the cookware article). It will be appreciated that other benefits may additionally and/or alternatively be realized through the use of the thermal insulating coating on the cookware article. Additionally, it will be appreciated that while the description herein generally relates to thermal insulating coatings for cookware articles, the thermal insulating coating may be advantageously utilized in other articles that may benefit from a thermal insulating coating. For example, the thermal insulating coating herein may be applied to cooking grills, vehicle and aircraft components (e.g., fuel tanks, exhaust components, engine components, etc.), batteries (e.g., such as lithium ion batteries which may experience heating during charging and/or discharging), electronic components or devices (e.g., which may experience heating during use), as well as in various addition applications.

According to the invention, a coated cookware article and a method for producing a coated cookware article are provided. The coated cookware article includes a cookware substrate and a thermal insulating coating disposed on at least a portion of the exterior of the cookware substrate. The thermal insulating coating further includes a binder component and a microsphere component dispersed in the binder component. The microsphere component includes between about 2% to 25% of microspheres by weight of the binder component.

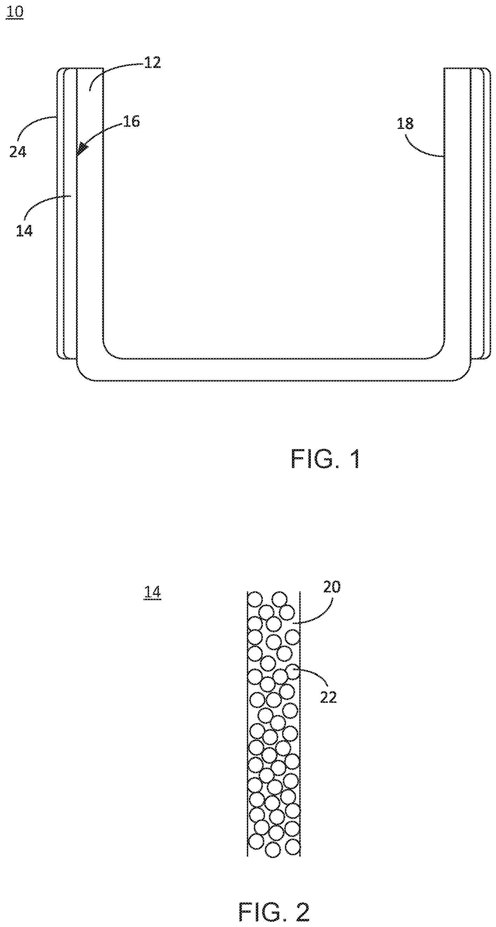

For example, and referring also to FIG. 1, an illustrative example embodiment of a coated cookware article 10 is generally shown. The coated cookware article 10 may generally include a cookware substrate 12 and a thermal insulating coating 14 disposed on at least a portion of the exterior of the cookware substrate 12. In the illustrative embodiment, the cookware substrate 12 (e.g., which may generally define the configuration of the cookware article 10) is shown generally configured as a cooking pot. However, it will be appreciated that as used herein a cookware substrate may generally be configured as any cookware item or appliance that may be heated during use. Examples of cookware substrates may include, but are not limited to, frying pans, saute pans, pots, oven bakeware, casserole dishes, kettles, rice cookers, hot water or coffee carafes, and the like. As is generally known, the cookware substrate may be formed from any suitable material, such as aluminum, stainless steel, cast iron, glass, ceramic, copper, cermet, and the like, as well as combinations of such materials (e.g., in a layered configuration and/or with different portions of the cookware substrate being formed from different materials). Additionally, while not shown, the cookware article may include additional features, such as non-stick coatings, decorative coatings, etc., applied to one or more interior and/or exterior surface of the cookware article (e.g., applied at least a portion of an interior surface of the cookware substrate, applied to at least a portion of an exterior surface of the cookware substrate, and/or to applied to at least a portion of an exterior surface of the thermal insulating coating).

As shown in the illustrative embodiment in FIG. 1, the thermal insulating coating 14 may be disposed on an exterior surface 16 of the cookware substrate 12. In some such embodiments, when the thermal insulating coating 14 is disposed on the exterior surface 16 of the cookware substrate 12, the thermal insulating coating 14 may provide some degree of impedance to thermal transfer from the exterior surface 16 of the cookware substrate 12 to the environment. For example, in some such configurations, the thermal insulating coating 14 may provide some degree of burn resistance for users who may inadvertently contact the exterior of the cookware article 10. Further, in some embodiments, the thermal insulating coating 14 may provide improved heat retention within the cookware substrate 12, e.g., by impeding heat transfer from the cookware substrate to the environment via the exterior surface 16. In some situations, the improved heat retention provided by the thermal insulating layer may improve cooking efficiency of the cookware article 10 (e.g., by requiring less heat input to maintain a desired temperature at an interior surface 18 of the cookware substrate 12). Various additional and/or alternative features and advantages of the thermal insulating coating may also be realized.

As shown in the illustrative embodiment of FIG. 1, in some embodiments the thermal insulating coating 14 may be disposed on a portion of an exterior surface of the cookware substrate 12 that is intended to receive indirect flame during use. For example, as shown in the example embodiment, the thermal insulating coating 14 may be disposed on exterior sidewall portions of the cookware substrate 12. Consistent with such an embodiment, heat input into the cookware article (e.g., via a burning or other heating source) may not be impeded by the thermal insulating coating. Similarly, in some embodiments in which the thermal insulating coating 14 is disposed on a portion of an exterior surface 16 of the cookware substrate 12, heat transfer may not be impeded from the cookware substrate 12 to food items being heated within the cookware article.

Further, in some embodiments in which the thermal insulating coating is disposed on exterior surfaces of the cookware substrate 12 that are intended to receive indirect flame during use, it may not be necessary for the thermal insulating coating 14 to withstand the conditions of direct flame heating (e.g., which may exceed the nominal temperature of the cookware article during intended use). In some such embodiments, the integrity and useful life of the thermal insulating coating 14 may be extended. Similarly, as a thermal insulating coating 14 disposed on an exterior surface 16 of the cookware substrate 12 may not directly contact food that is being prepared, adverse interactions between the thermal insulating coating an the food may be avoided. However, in other embodiments, the thermal insulating coating may be disposed on exterior surfaces of the cookware substrate that may be intended to receive direct flame heating and/or that may be intended to contact food being prepared.

The thermal insulating coating may include a binder component and a microsphere component dispersed in the binder component. In general, the binder component may include any suitable material that may be capable of forming a solid layer that may adhere and/or bond to the exterior surface 16 of the cookware substrate 12, and may provide sufficient mechanical integrity to resist substantial damage during typical usage of the cookware article 10, and may provide sufficient thermal stability to resist substantial degradation under typical temperature ranges anticipated for the cookware article 10. In regard to the thermal stability, it will be appreciated that different cookware articles may have different anticipated temperature ranges of use. For example, a frying pan may be expected to experience temperatures under use that may be substantially greater than temperatures under use anticipated for a coffee carafe. As such, a suitable binder component may be selected having a thermal stability suitable to the intended use of the final cookware article.

In some embodiments, the binder component may include a powder and/or a liquid that may be dried, cured, and/or fused to form generally continuous layer on the exterior surface 16 of the cookware substrate. According to some embodiments, the binder component may include a combination of a solid component and a fluid component, wherein the fluid component may be dried, evaporated, cured, or otherwise removed or converted to provide a solid binder component. Once the fluid component has been removed or converted the binder component may form a continuous layer and/or may be subsequently treated (e.g., as by fusing, heat treating, undergoing a chemical reaction, or the like) to provide a generally continuous layer.

According to some illustrative example embodiments, the binder component may include an enamel-based binder (e.g., such as an enamel paint), a resin-based binder (e.g., such as a resin-based paint, an oil-based paint, or the like), and/or a ceramic-based binder (e.g., a porcelain material, a glaze, or the like), as well as various mixtures and combinations of the foregoing, with the understanding that the foregoing example categories of binder components may overlap. Such binder components may include organic-based materials, silicone-based materials, ceramic-based materials, and the like. Some examples may include, but are not limited to, silicone materials, siloxane polymer materials, epoxies, urethane materials, polyester materials, alkyd materials, petroleum based materials, other polymeric based materials, fusible materials, and the like. In some example embodiments, the binder component may include additional materials, such as fillers, pigments, modifiers, and additives. In an illustrative example, the binder component may include a high temperature paint. As is known, various high temperature paints may employ different chemistries, which may suitably be utilized.

As discussed above, the thermal insulating coating may also include a microsphere component, e.g., that may be dispersed within the binder component. For example, and referring also to FIG. 2, a representative illustrative example of a thermal insulating coating 14 is shown in detail. It should be appreciated that the depiction in FIG. 2 is intended as a representational depiction, and should not be construed as a literal depiction of the microstructure of the thermal insulating layer. As generally depicted in FIG. 2, the thermal insulating layer 14 may generally include the binder component 20, which may generally provide a continuous phase, having the microsphere component, which may include a plurality of microspheres (e.g., microsphere 22) dispersed within the binder component 20. Consistent with such an arrangement, the microsphere component (e.g., including the plurality of individual microspheres) may provide an insulating effect within the binder component. As such, the thermal insulating coating 14 may impede heat transfer through the thermal insulating coating.

In general, the microsphere component may include any suitable microspheres or micro-particles that may reduce the heat transfer through the thermal insulating coating (e.g., as compared to the binder component alone). According to some illustrative example embodiments, the microsphere component may include glass microspheres, ceramic microspheres, and/or a mixture of glass microspheres and ceramic microspheres. In some embodiments, at least a portion of the microsphere component may include solid microspheres and/or may include hollow microspheres, which may include a void or contained gas pocket within a shell of the microsphere material. In some embodiments, microspheres may include particles having a diameter of between about 10 microns to about 200 microns. In some specific example, suitable microspheres may have a diameter of between about 30 microns to about 100 microns. In some further examples, suitable microspheres may have a diameter of between about 50 microns to about 90 microns. Microspheres having other diameters may also be utilized. It will be appreciated that the microsphere component may include a mixture of microspheres having a range of diameters. Accordingly, in some embodiments the foregoing diameter ranges may represent an average diameter of the microspheres within the microsphere component. Additionally, in some embodiments suitable microsphere component may have a density of between about 0.050 g/cc to about 1.0 g/cc. Further, in some embodiments, suitable microsphere component may have a density of between about 0.050 g/cc to about 0.5 g/cc. In still further embodiments, suitable microsphere component may have a density of between about 0.1 g/cc to about 0.25 g/cc. Microspheres having other densities, both greater and lesser, may also be utilized. As discussed above with respect to diameter, it will be appreciated that the microsphere component may include a mixture of microspheres having a range of density. As such, in some embodiments, the foregoing density ranges may represent an average density of microspheres within the microsphere component.

According to some embodiments, the microsphere component may include between about 2% to 25% of microspheres by weight of the binder component. In further example embodiments, the microsphere component may include between about 5% to about 18% of microspheres by weight of the binder component. In still further example embodiments, the microsphere component may include between about 2% to about 20% of microspheres by weight of the binder component. In still further example embodiments, the microsphere component may include between about 2% to about 18% of microspheres by weight of the binder component. In still further example embodiments, the microsphere component may include between about 2% to about 15% of microspheres by weight of the binder component. In still further example embodiments, the microsphere component may include between about 5% to about 25% of microspheres by weight of the binder component. In still further example embodiments, the microsphere component may include between about 5% to about 20% of microspheres by weight of the binder component. In yet a further example embodiment, the microsphere component may include between about 5% to about 15% of microspheres by weight of the binder component. It will be appreciated that additional and/or alternative microsphere content may suitably be utilized in some embodiments.

In general, the thickness of the thermal insulating coating 14 may be selected to provide a desired degree of impedance to thermal transfer through the thermal insulating coating. For example, the thickness of the thermal insulating coating 14 may vary depending upon the intended temperature of use of the cookware article 10. In this regard, in some embodiments in which a relatively lower use temperature is anticipated for the cookware article (e.g., a coffee carafe) a relatively thinner thermal insulating coating 14 may be utilized as compared to an embodiment in which a relatively higher use temperature is anticipated for the cookware article (e.g., a frying pan). However, it will also be appreciated that the thickness of the thermal insulating coating 14 may depend (additionally and/or alternatively), at least in part, upon the desired effect to be provided by the thermal insulating coating 14. For example, in an implementation in which the thermal insulating coating is intended to provide some degree of protection against, or mitigation of, burns to a user who inadvertently touches a heated cookware article, a relatively thicker thermal insulating coating 14 may be desired as compared to an implementation in which the thermal insulating coating 14 is primarily intended to provide some reduction in heat loss from the cookware article 10. It will further be appreciated that various additional and/or alternative considerations may influence the desired thickness of the thermal insulating coating 14, including, but not limited to, the relative efficiency of the thermal insulating component, the characteristics of the binder component, and the like. In some general illustrative embodiments, the thermal insulating coating may have a thickness of between about 0.05 mm to about 3.0 mm. In some embodiments, the thermal insulating coating may have a thickness of between about 0.5 mm to about 2.0 mm. In still further example embodiments, the thermal insulating coating may have a thickness of between about 0.7 mm to about 1.5 mm. In yet a further example embodiment, the thermal insulating coating may have a thickness of between about 0.7 mm to about 1.0 mm. It will be appreciated that other thicker and/or thinner thickness of the thermal insulating coating may also be utilized.

In some embodiments, an additional coating may be disposed over at least a portion of the thermal insulating coating. For example, and as shown in FIG. 1, additional coating 24 may be disposed over at least a portion of the thermal insulating coating 14. In some embodiments, the additional coating 24 may include a protective coating disposed on at least a portion of the thermal insulating coating 14. Consistent with such an embodiment, the protective coating may, for example, increase the structural integrity of the thermal insulating coating, reduce the likelihood of damage to the thermal insulating coating, provide improved thermal resistance to the thermal insulating coating (e.g., to provide additional protection to the thermal insulating in the event of direct flame contact with the thermal insulating coating), and/or provide various additional and/or alternative characteristics. In some implementations, the additional coating 24 may provide aesthetic enhancements to the article of cookware and/or provide additional and/or alternative effects. In an illustrative example embodiment, the additional coating 24 may include a high temperature clear coat, an enamel, or the like. In some embodiments the additional coating 24 may be disposed over only a portion of the thermal insulating coating 14. In some embodiments the additional coating 24 may be disposed over the entirety of the thermal insulating coating 14. In still further embodiments, the additional coating 24 may be disposed over at least a portion of the thermal insulating coating and at least a portion of cookware substrate 12 not including the thermal insulating coating 14. Various additional and/or alternative configurations may also be utilized.

Consistent with the foregoing, a cookware article may be provided having a thermal insulating coating applied to at least a portion of a cookware substrate. In a general embodiment, a thermal insulating system may be provided, and may be applied to at least a portion of an exterior surface of a cookware substrate. The applied thermal insulating system may be cured to provide a solid thermal insulating coating on at least a portion of the cookware substrate.

In an embodiment, the thermal insulating system may include a fluid binder component and a microsphere component. As generally discussed above, according to some example embodiments, the fluid binder component may include, but is not limited to, one or more of an enamel binder, a resin binder, silicone binder, a porcelain binder, and a ceramic binder. One suitable example of a fluid binder component may include a high temperature paint. As discussed in greater detail below, the thermal insulating system may include additional components, including, but not limited to, solvents, flow modifiers, fillers, processing aids, curing agents, and the like. In some implementations, one or more of the additional components may be mixed with the thermal insulating system after the fluid binder component has been mixed with the microsphere component. In some implementations, one or more of the additional components may be combined with the fluid binder component prior to mixing with the microsphere component. In further implementations, one or more of the additional components may be combined with the microsphere component prior to mixing the fluid binder component. Further, at least a portion of the one or more additional components may be combined with the fluid binder component and one or more additional components may be combined with the microsphere component prior to mixing of the fluid binder component and the microsphere component. Any suitable process may be utilized for mixing the fluid binder component and the microsphere component (as well as any additional components) to provide a generally consistent distribution of the microsphere component within the fluid binder component.

The microsphere component may include any suitable microspheres. In some example embodiments, the microsphere component may include glass microspheres, ceramic microspheres, and/or a mixture of glass microspheres and ceramic microspheres. In some illustrative example embodiments the microspheres may include hollow microspheres. In some embodiments, the microspheres may include solid microspheres. As generally discussed above, according to different implementations various ranges of microspheres may be included. According to the invention, the microsphere component includes between about 2% to about 25% microspheres by weight of binder solids. That is, the microsphere component includes between about 2% to about 25% microspheres by weight of the weight of the dried or cured binder component in the final thermal insulation coating. According to one particular illustrative example embodiment, the thermal insulating system may include between about 5% to about 18% of microspheres by weight of the binder component in the solid thermal insulating coating. Various additional and/or alternative microsphere loading content may also be utilized.

The thermal insulating system may be applied to at least a portion of an exterior of a cookware substrate. According to some illustrative example embodiments, applying the thermal insulating system to an exterior surface of the cookware substrate may include one or more of a solgel process, a spray coating process, a dip coating process, and a brush coating process. The details of such example coating processes are generally understood by those having skill in the art. As generally discussed above, various additional and/or alternative components may be used in connection with the thermal insulating system. In some embodiments, one or more of the additional and/or alternative components may be selected according to the application process to be used in applying the thermal insulating system to the cookware substrate. Examples of such additional and/or alternative components may include, but are not limited to, solvents, processing agents, flow modifiers, viscosity modifiers, curing agents, that may be appropriate to the application process. It will be appreciated that different application processes may be facilitated through different thermal insulating system viscosities, flow characteristics, and the like. Accordingly, some additional and/or alternative components may be selected based upon, at least in part, the application process utilized, and may vary for different application processes and/or other characteristics of the thermal insulating system.

In some embodiments, at least a portion of the exterior surface of the cookware substrate to which the thermal insulating system is applied may be pretreated, for example, to improve adhesion and/or bonding between the final thermal insulating coating and the cookware substrate. Examples of surface pretreatment processes may include, but are not limited to, chemical etching of the exterior surface of the cookware substrate, mechanical cleaning or preparation (e.g., sanding, sandblasting, abrasive scrubbing, and the like), and cleaning of the exterior surface of the cookware substrate (e.g., using detergents, degreasers, and/or other suitable cleaning agents).

In some embodiments, applying the thermal insulating system to at least a portion of the cookware substrate may include applying the thermal insulating system to a portion of the cookware substrate intended to have indirect flame contact during use. The expanse and location of the applied thermal insulating system may vary based upon, at least in part, the nature of the cookware article. In some embodiments, an exterior surface of the cookware article intended to be heated, such as the bottom of a frying pan or pot, may remain uncoated. In such an embodiment, the application of heat to the cookware article may not be impeded by the final thermal insulating coating. Consistent with the discussion above, the thermal insulating system may be applied to the cookware substrate such that the final thermal insulating coating may have a cured thickness of between about 0.05 mm to about 3.0 mm. It will be appreciated that the applied thermal insulating system may experience a reduction in thickness as a result of the drying and/or curing process. As such, the thermal insulating system may be applied having a thickness greater than the desired final thickness of the final thermal insulating coating. As such, the thickness of the applied thermal insulating system may be determined based upon, at least in part, an anticipated degree of shrinkage during the drying and/or curing process. Further, and as discussed above, additional and/or alternative thicknesses of the final thermal insulating coating may be utilized. Additionally, it will be appreciated that, depending upon the desired final thickness of the thermal insulating coating and the characteristics of the thermal insulating system, the thermal insulating system may be applied to the cookware substrate in a single coating or in multiple layers and/or application steps. In embodiments in which the thermal insulating system may be applied in multiple layers and/or application steps, previous application steps may be at least partially dried and/or cured prior to the application of subsequent layers. In some embodiments, previous layers of the thermal insulating system may be surface treated (e.g., including, but not limited to, chemical etching, mechanical scrubbing, and chemical cleaning) prior to the application of subsequent layers.

Providing the thermal insulating coating may, in some embodiments, include curing the thermal insulating system to provide a solid thermal insulating coating. Curing the thermal insulating system may include removing a fluid component of the binder component. In some embodiments, removing the fluid component from the binder component may include drying (including drying at controlled temperatures and/or temperature ranges), placing the cookware substrate having the applied thermal insulating system under vacuum, as well as other suitable processes. In some embodiments, curing the thermal insulating system to provide the final thermal insulating coating may include post curing the solid thermal insulating coating (e.g., the thermal insulating system having at least a portion of the fluid component removed). In some embodiments, post curing the solid thermal insulating coating may include heating the solid thermal insulating coating to a desired temperature and/or temperature range. In some embodiments, a series of heating processed may be utilized to achieve a final cured state.

In some embodiments, providing the cookware article including the thermal insulating coating may include applying a protective coating to at least a portion of the solid thermal insulating coating. As generally discussed above, the protective coating may include, but is not limited to, a high temperature clear coat, a high temperature pain, a glaze, or other suitable protective coating. Such protective coatings may be applied using any suitable process, including, but not limited to, spray coating, dip coating, brush coating, a solgel process, and the like. In some embodiments the applied protective coating may be cured and/or post cured at elevated temperatures to achieve a final desired state of the protective coating. For example, curing and/or post curing may include heating the cookware article to a desired temperature and/or temperature range. In some embodiments, curing the protective coating may include at least partially fusing the protective coating (e.g., in an embodiment in which the protective coating may include a glaze or similar material).

A variety of features of example implementations of a thermal insulating coating for cookware have been described. However, it will be appreciated that various additional features and structures may be implemented in connection with a thermal insulating coating according to the present disclosure, including the use of a thermal insulating coating in applications other than cookware. As such, the features and attributes described herein should be construed as a limitation on the present disclosure.

## Claims

1. A coated cookware article (10) comprising:
a cookware substrate (12);
a thermal insulating coating (14) disposed on at least a portion of the exterior of the cookware substrate (12), the thermal insulating coating (14)comprising:
a binder component (20); and
a microsphere component dispersed in the binder component including between about 2% to 25% of microspheres (22) by weight of the binder component (20),**characterized in that** the microsphere component includes hollow microspheres.

2. The coated cookware article (10) according to claim 1, wherein the cookware substrate (12) includes one or more of aluminum, stainless steel, copper, cermet, and cast iron.

3. The coated cookware article (10) according to claim 1, wherein the thermal insulating coating (14) is disposed on exterior surfaces intended to receive indirect flame.

4. The coated cookware article (10) according to claim 1, wherein the thermal insulating coating (14) is disposed on an exterior sidewall (16) of the cookware substrate (12).

5. The coated cookware article (10) according to claim 1, wherein the binder component (20) includes an enamel-based binder.

6. The coated cookware article (10) according to claim 1, wherein the binder component (20) includes a resin-based binder.

7. The coated cookware article (10) according to claim 1, wherein the binder component (20) includes a ceramic-based binder.

8. The coated cookware article (10) according to claim 1, wherein the binder component (20) includes a high temperature paint.

9. The coated cookware article (10) according to claim 1, wherein the microspheres (22) include glass microspheres.

10. The coated cookware article (10) according to claim 1, wherein the microspheres (22) include ceramic microspheres.

11. The coated cookware article (10) according to claim 1, wherein the microspheres (22) include a combination of glass microspheres and ceramic microspheres.

12. The coated cookware article (10) according to claim 1, wherein the microsphere component includes between about 5% to about 18% of microspheres (22) by weight of the binder component (20).

13. The coated cookware article (10) according to claim 1, wherein the thermal insulating coating (14) has a thickness of between about 0.05 mm to about 3.0 mm.

14. The coated cookware article (10) according to claim 1, further comprising a protective coating disposed on at least a portion of an exterior surface of the thermal insulating coating (14).

15. A method of providing a thermal insulating exterior on cookware comprising:
providing a thermal insulating system comprising a fluid binder component (20) and a microsphere component, the microsphere component including between about 2%-25% microspheres (22) by weight of binder solids;
applying the thermal insulating system to at least a portion of an exterior of a cookware substrate; and
curing the thermal insulating system to provide a solid thermal insulating coating, **characterized in that** the microspheres (22) include hollow microspheres.

16. The method according to claim 15, wherein the fluid binder component (20) includes one or more of an enamel binder, a resin binder, an a ceramic binder.

17. The method according to claim 15, wherein the microspheres (22) include glass microspheres.

18. The method according to claim 15, wherein the microspheres (22) include ceramic microspheres.

19. The method according to claim 15, wherein the microspheres (22) include a mixture of glass microspheres and ceramic microspheres.

20. The method according to claim 15, wherein the thermal insulating coating (14) includes between about 5% to about 18% of microspheres (22) by weight of the binder component (20) in the solid thermal insulating coating (14).

21. The method according to claim 15, wherein applying the thermal insulating system includes one or more of a solgel process, a spray coating process, a dip coating process, and a brush coating process.

22. The method according to claim 15, wherein applying the thermal insulating system includes applying the thermal insulating system to have a cured thickness of between about 0.05 mm to about 3.0 mm.

23. The method according to claim 15, wherein curing the thermal insulating system includes removing a fluid component of the binder component.

24. The method according to claim 15, wherein further comprising post curing the solid thermal insulating coating.

25. The method according to claim 15, further comprising applying a protective coating to at least a portion of the solid thermal insulating coating.

## Patentansprüche

1. Beschichteter Kochgeschirrartikel (10), umfassend:
ein Kochgeschirrsubstrat (12);
eine wärmeisolierende Beschichtung (14), die auf zumindest einem Teil der Außenseite des Kochgeschirrsubstrats (12) angeordnet ist, wobei die wärmeisolierende Beschichtung (14) umfasst:
eine Binderkomponente (20); und
eine Mikrokugelkomponente, die in der Binderkomponente dispergiert ist und zwischen ca. 2 Gewichts-% bis 25 Gewichts-% der Binderkomponente (20) Mikrokugeln (22) enthält, **dadurch gekennzeichnet, dass** die Mikrokugelkomponente hohle Mikrokugeln enthält.

2. Beschichteter Kochgeschirrartikel (10) nach Anspruch 1, wobei das Kochgeschirrsubstrat (12) Aluminium und/oder Edelstahl und/oder Kupfer und/oder Cermet und/oder Gusseisen enthält.

3. Beschichteter Kochgeschirrartikel (10) nach Anspruch 1, wobei die wärmeisolierende Beschichtung (14) auf Außenflächen angeordnet ist, die zum Empfang einer indirekten Flamme vorgesehen sind.

4. Beschichteter Kochgeschirrartikel (10) nach Anspruch 1, wobei die wärmeisolierende Beschichtung (14) auf einer äußeren Seitenwand (16) des Kochgeschirrsubstrats (12) angeordnet ist.

5. Beschichteter Kochgeschirrartikel (10) nach Anspruch 1, wobei die Binderkomponente (20) einen Emaille-basierten Binder enthält.

6. Beschichteter Kochgeschirrartikel (10) nach Anspruch 1, wobei die Binderkomponente (20) einen Harz-basierten Binder enthält.

7. Beschichteter Kochgeschirrartikel (10) nach Anspruch 1, wobei die Binderkomponente (20) einen Keramik-basierten Binder enthält.

8. Beschichteter Kochgeschirrartikel (10) nach Anspruch 1, wobei die Binderkomponente (20) eine Hochtemperaturfarbe enthält.

9. Beschichteter Kochgeschirrartikel (10) nach Anspruch 1, wobei die Mikrokugeln (22) Glasmikrokugeln enthalten.

10. Beschichteter Kochgeschirrartikel (10) nach Anspruch 1, wobei die Mikrokugeln (22) Keramikmikrokugeln enthalten.

11. Beschichteter Kochgeschirrartikel (10) nach Anspruch 1, wobei die Mikrokugeln (22) eine Kombination von Glasmikrokugeln und Keramikmikrokugeln enthalten.

12. Beschichteter Kochgeschirrartikel (10) nach Anspruch 1, wobei die Mikrokugelkomponente zwischen ca. 5 Gewichts-% bis ca. 18 Gewichts-% der Binderkomponente (20) Mikrokugeln (22) enthält.

13. Beschichteter Kochgeschirrartikel (10) nach Anspruch 1, wobei die wärmeisolierende Beschichtung (14) eine Dicke von zwischen ca. 0,05 mm bis ca. 3,0 mm aufweist.

14. Beschichteter Kochgeschirrartikel (10) nach Anspruch 1, ferner umfassend eine Schutzbeschichtung, die auf zumindest einem Teil einer Außenfläche der wärmeisolierenden Beschichtung (14) angeordnet ist.

15. Verfahren zum Bereitstellen einer wärmeisolierenden Außenseite eines Kochgeschirrs, umfassend:
Bereitstellen eines wärmeisolierenden Systems, das eine Fluidbinderkomponente (20) und eine Mikrokugelkomponente enthält, wobei die Mikrokugelkomponente zwischen ca. 2 Gewichts-%-25 Gewichts-% von Binderfeststoffen Mikrokugeln (22) enthält;
Aufbringen des wärmeisolierenden Systems auf zumindest einen Teil einer Außenseite eines Kochgeschirrsubstrats; und
Aushärten des wärmeisolierenden Systems, um eine feste wärmeisolierende Beschichtung bereitzustellen, **dadurch gekennzeichnet, dass** die Mikrokugeln (22) hohle Mikrokugeln enthalten.

16. Verfahren nach Anspruch 15, wobei die Fluidbinderkomponente (20) einen Emaillebinder und/oder einen Harzbinder und/oder einen Keramikbinder enthält.

17. Verfahren nach Anspruch 15, wobei die Mikrokugeln (22) Glasmikrokugeln enthalten.

18. Verfahren nach Anspruch 15, wobei die Mikrokugeln (22) Keramikmikrokugeln enthalten.

19. Verfahren nach Anspruch 15, wobei die Mikrokugeln (22) ein Gemisch aus Glasmikrokugeln und Keramikmikrokugeln enthalten.

20. Verfahren nach Anspruch 15, wobei die wärmeisolierende Beschichtung (14) zwischen ca. 5 Gewichts-% bis ca. 18 Gewichts-% der Binderkomponente (20) Mikrokugeln (22) in der festen wärmeisolierenden Beschichtung (14) enthält.

21. Verfahren nach Anspruch 15, wobei Aufbringen des wärmeisolierenden Systems einen Solgelprozess und/oder einen Sprühbeschichtungsprozess und/oder einen Tauchbeschichtungsprozess und/oder einen Pinselbeschichtungsprozess enthält.

22. Verfahren nach Anspruch 15, wobei Aufbringen des wärmeisolierenden Systems Aufbringen des wärmeisolierenden Systems mit einer gehärteten Dicke zwischen ca. 0,05 mm bis ca. 3,0 mm enthält.

23. Verfahren nach Anspruch 15, wobei Aushärten des wärmeisolierenden Systems Entfernen einer Fluidkomponente der Binderkomponente enthält.

24. Verfahren nach Anspruch 15, wobei es ferner Nachhärten der festen wärmeisolierenden Beschichtung umfasst.

25. Verfahren nach Anspruch 15, ferner umfassend Aufbringen einer Schutzbeschichtung auf zumindest einen Teil der festen wärmeisolierenden Beschichtung.

## Revendications

1. Ustensile de cuisine revêtu (10) comprenant :
un substrat pour ustensile de cuisine (12) ;
un revêtement d'isolation thermique (14) disposé sur au moins une partie de l'extérieur du substrat pour ustensile de cuisine (12), le revêtement d'isolation thermique (14) comprenant :
un composant liant (20) ; et
un composant à microsphères dispersé dans le composant liant incluant entre environ 2 % et 25 % de microsphères (22) en poids du composant liant (20), **caractérisé en ce que** le composant à microsphères inclut des microsphères creuses.

2. Ustensile de cuisine revêtu (10) selon la revendication 1, où le substrat pour ustensile de cuisine (12) inclut un ou plusieurs parmi l'aluminium, l'acier inoxydable, le cuivre, un cermet et la fonte.

3. Ustensile de cuisine revêtu (10) selon la revendication 1, où le revêtement d'isolation thermique (14) est disposé sur les surfaces extérieures destinées à recevoir une flamme indirecte.

4. Ustensile de cuisine revêtu (10) selon la revendication 1, où le revêtement d'isolation thermique (14) est disposé sur une paroi extérieure (16) du substrat pour ustensile de cuisine (12).

5. Ustensile de cuisine revêtu (10) selon la revendication 1, où le composant liant (20) inclut un liant à base d'un émail.

6. Ustensile de cuisine revêtu (10) selon la revendication 1, où le composant liant (20) inclut un liant à base d'une résine.

7. Ustensile de cuisine revêtu (10) selon la revendication 1, où le composant liant (20) inclut un liant à base d'une céramique.

8. Ustensile de cuisine revêtu (10) selon la revendication 1, où le composant liant (20) inclut une peinture haute température.

9. Ustensile de cuisine revêtu (10) selon la revendication 1, où les microsphères (22) incluent des microsphères de verre.

10. Ustensile de cuisine revêtu (10) selon la revendication 1, où les microsphères (22) incluent des microsphères de céramique.

11. Ustensile de cuisine revêtu (10) selon la revendication 1, où les microsphères (22) incluent une combinaison de microsphères de verre et de microsphères de céramique.

12. Ustensile de cuisine revêtu (10) selon la revendication 1, où le composant à microsphères inclut entre environ 5 % et environ 18 % de microsphères (22) en poids du composant liant (20).

13. Ustensile de cuisine revêtu (10) selon la revendication 1, où le revêtement d'isolation thermique (14) a une épaisseur entre environ 0,05 mm et environ 3,0 mm.

14. Ustensile de cuisine revêtu (10) selon la revendication 1 comprenant en outre un revêtement protecteur disposé sur au moins une partie d'une surface extérieure du revêtement d'isolation thermique (14).

15. Méthode permettant d'obtenir un extérieur d'isolation thermique sur un ustensile de cuisine, comprenant les étapes qui consistent à :
se munir d'un système d'isolation thermique comprenant un composant liant liquide (20) et un composant à microsphères, le composant à microsphères incluant entre environ 2 %-25 % de microsphères (22) en poids des solides liants ;
appliquer le système d'isolation thermique sur au moins une partie d'un extérieur d'un substrat pour ustensile de cuisine ; et
cuire le système d'isolation thermique pour obtenir un revêtement d'isolation thermique solide, **caractérisé en ce que** les microsphères (22) incluent des microsphères creuses.

16. Méthode selon la revendication 15, où le composant liant liquide (20) inclut un ou plusieurs parmi un liant émail, un liant résine et un liant céramique.

17. Méthode selon la revendication 15, où les microsphères (22) incluent des microsphères de verre.

18. Méthode selon la revendication 15, où les microsphères (22) incluent des microsphères de céramique.

19. Méthode selon la revendication 15, où les microsphères (22) incluent un mélange de microsphères de verre et de microsphères de céramique.

20. Méthode selon la revendication 15, où le revêtement d'isolation thermique (14) inclut entre environ 5 % et environ 18 % de microsphères (22) en poids du composant liant (20) dans le revêtement d'isolation thermique solide (14).

21. Méthode selon la revendication 15, où l'application du système d'isolation thermique inclut un ou plusieurs parmi un procédé sol-gel, un procédé de revêtement par projection, un procédé de revêtement par immersion et un procédé de revêtement à la brosse.

22. Méthode selon la revendication 15, où l'application du système d'isolation thermique inclut l'application du système d'isolation thermique de manière à obtenir une épaisseur après cuisson entre environ 0,05 mm et environ 3,0 mm.

23. Méthode selon la revendication 15, où la cuisson du système d'isolation thermique inclut l'élimination d'un composant liquide du composant liant.

24. Méthode selon la revendication 15 comprenant en outre une post-cuisson du revêtement d'isolation thermique solide.

25. Méthode selon la revendication 15 comprenant en outre l'application d'un revêtement protecteur sur au moins une partie du revêtement d'isolation thermique solide.
